(19)

Europäisches
Patentamt
European
Patent Office
Office européen
des brevets

(11) **EP 4 169 387 A1**

(12) **EUROPEAN PATENT APPLICATION**
published in accordance with Art. 153(4) EPC

| | |
|---|---|
| (43) Date of publication:<br>**26.04.2023 Bulletin 2023/17** | (51) International Patent Classification (IPC):<br>**A23L 2/00** (2006.01)     **A23L 2/38** (2021.01) |
| (21) Application number: **21825379.7** | (52) Cooperative Patent Classification (CPC):<br>**A23L 2/00; A23L 2/38** |
| (22) Date of filing: **03.06.2021** | (86) International application number:<br>**PCT/JP2021/021173** |
| | (87) International publication number:<br>**WO 2021/256277 (23.12.2021 Gazette 2021/51)** |

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br>Designated Validation States:<br>**KH MA MD TN** | (72) Inventors:<br>• ITO, Nobuhiro<br>  **Kawasaki-shi, Kanagawa 211-0067 (JP)**<br>• SUZUKI, Tomonori<br>  **Kawasaki-shi, Kanagawa 211-0067 (JP)**<br>• UEMOTO, Sohei<br>  **Kawasaki-shi, Kanagawa 211-0067 (JP)** |
| (30) Priority: **19.06.2020   JP 2020105949** | (74) Representative: **Vossius & Partner**<br>**Patentanwälte Rechtsanwälte mbB**<br>**Siebertstraße 3**<br>**81675 München (DE)** |
| (71) Applicant: **Suntory Holdings Limited**<br>**Osaka 530-8203 (JP)** | |

(54)    **TASTE QUALITY IMPROVING AGENT FOR BARLEY TEA AND BARLEY TEA BEVERAGE**

(57)    An object of the present invention is to provide a technique of reducing the harsh taste of barley tea while allowing the barley tea to retain its unique flavors even when the barley tea is drunk at ordinary temperature.

The unique flavors of barley tea can be enhanced by incorporating at least one selected from 2,3-butanedione and 2,3-pentanedione.

EP 4 169 387 A1

## Description

### TECHNICAL FIELD

The present invention relates to a barley tea beverage. In particular, this invention relates to a taste quality improving agent for barley tea, which is capable of reducing the harsh taste of barley tea while allowing the barley tea to retain its unique flavor even when the barley tea is drunk at ordinary temperature.

### BACKGROUND ART

Barley tea is enjoyed as a liquid extract having unique sweet and roasted aromas, which is obtained by decocting roasted barley with boiling water or infusing roasted barley in hot or cold water. Since the effects of barley tea on health have been elucidated in recent years, it is recommended not only to drink barley tea as an article of taste, but also to drink barley tea in a continuous manner as a hydration (thirst-quenching) beverage for relieving a dry throat or as a healthy beverage which is expected to improve blood circulation. Also, barley tea has started to be drunk as a "sipping drink" which is kept on the desk and drunk little by little over time during work.

Barley tea would often be drunk at low temperatures around refrigeration temperature, since it has been stored under refrigeration in a barley tea pot. However, in the case of sipping barley tea, the liquid temperature of barley tea gradually gets close to ordinary temperature, since it is left at ordinary temperature for a long time. When drunk at ordinary temperature, barley tea decreases in roasted and sweet aromas as compared with when drunk at low temperatures.

With regard to barley tea beverages, there has been proposed a packaged barley tea beverage which gives off moderate roasted and sweet aromas when drunk not only at low temperatures but also at ordinary temperature perceived as lukewarm, wherein the packaged barley tea beverage is prepared by: adjusting a *kokumi* taste, a sense of concentration, and the like through controlling the content of polysaccharides such as starch and β-glucan, and the content of barley-derived soluble solids; adjusting a sweet taste and the like through controlling the content of a disaccharide such as maltose; and adjusting aroma and the like through controlling the contents of aroma components such as furan-based compounds and pyrazine-based compounds (PTL 1). Also, there has been proposed a barley for use to make barley tea, which is characterized in that a roasted aroma, a sweet taste, and a *kokumi* taste are enhanced by impregnating barley as a source material with an aqueous solution comprising at least one amino acid selected from the group consisting of leucine, valine and isoleucine, and then roasting the barley at a temperature of from 100 to 200°C (PTL 2).

### CITATION LIST

### PATENT LITERATURES

PTL 1: Japanese Unexamined Patent Application Publication No. JP 2012-217348
PTL 2: Japanese Unexamined Patent Application Publication No. JP 2012-170332

### SUMMARY OF INVENTION

### TECHNICAL PROBLEM

Barley tea contains components responsible for sweet and roasted flavors unique to barley tea, and components perceived as tasting harsh. When barley tea is drunk at ordinary temperature, the balance between components for unique sweet and roasted flavors of barley tea and harshness components may be broken, thereby leading to reduction in the palatability and thirst-quenching ability of the beverage. When barley tea is produced by cold brewing, in which barley is steeped in cold water, the produced barley tea becomes low in harsh taste perceived at ordinary temperature, and tastes mild and refreshing, but at the same time is apt to lack the aromas, color and taste unique to barley tea.

An object of the present invention resides in providing a technique capable of reducing the harsh taste of barley tea while allowing the barley tea to retain its unique flavors when drunk at ordinary temperature.

### SOLUTION TO PROBLEM

The present inventors have conducted intensive studies to achieve the aforementioned object, and as a result found that if the unique flavors of barley tea which deteriorate at ordinary temperature can be enhanced, the harsh taste of barley tea will become relatively less perceivable. Also, the inventors surprisingly found that 2,3-butanedione and 2,3-pentanedione, which are known as off-flavor components, are capable of enhancing the flavors of barley tea at ordinary temperature. Thus, the inventors have completed the present invention.

The present invention includes, but is not limited to, the following embodiments.

[1] A taste quality improving agent for barley tea comprising at least one selected from 2,3-butanedione and 2,3-pentanedione.

[2] The taste quality improving agent as set forth in [1], wherein the taste quality improving agent is intended for enhancing the flavors of barley tea drunk at ordinary temperature.

[3] The taste quality improving agent as set forth in [1] or [2], wherein the taste quality improving agent is used so as to ensure that a mass ratio of the total content of 2,3-butanedione and 2,3-pentanedione to the content of guaiacol in barley tea [(2,3-butanedione + 2,3-pentanedione)/guaiacol] falls within the range of from 2.8 to 10.

[4] A method for improving the taste quality of a barley tea beverage, the method comprising incorporating 2,3-butanedione in barley tea so as to ensure that a mass ratio of the total content of 2,3-butanedione and 2,3-pentanedione to the content of guaiacol in barley tea [(2,3-butanedione + 2,3-pentanedione)/guaiacol] falls within the range of from 2.8 to 10.

[5] A barley tea beverage having a mass ratio of the total content of 2,3-butanedione and 2,3-pentanedione to the content of guaiacol in barley tea [(2,3-butanedione + 2,3-pentanedione)/guaiacol] of from 2.8 to 10.

[6] A roasted barley having an L-value of from 20 to 50, wherein the roasted barley ensures that a liquid extract obtained by extracting 5 g of the roasted barley with 200 mL of hot water at 100°C for 5 minutes has a total content of 2,3-butanedione and 2,3-pentanedione per soluble solids content (Bx) of not less than 3500 ppb/Bx.

[7] A barley tea beverage made from the roasted barley as set forth in [6] as a source material.

ADVANTAGEOUS EFFECTS OF INVENTION

According to the present invention, the unique sweet and roasted flavors of barley tea are enhanced, and also the harsh taste is reduced, thereby obtaining a barley tea that is satisfactory in flavors and taste even when drunk at ordinary temperature. This invention is also advantageous in that it does not need any cumbersome procedures or complicated equipment.

DESCRIPTION OF EMBODIMENTS

(Taste quality improving agent)

The taste quality improving agent of the present invention comprises at least one selected from 2,3-butanedione and 2,3-pentanedione. 2,3-Butanedione and 2,3-pentanedione are odor components produced by yeast or microbial fermentation. These are indispensable aroma components in dairy products such as butter and cheese, and are also known as unfavorable off-flavor components in liquors. The inventors of this invention found that 2,3-butanedione and 2,3-pentanedione act to enhance the unique sweet and roasted aromas of barley tea while they are apt to cause an elevation of discrimination thresholds in barley tea.

One example of components responsible for the unique sweet and roasted aromas of barley tea is cyclotene. The low boiling point component cyclotene easily diffuses at ordinary temperature, thereby resulting in relative enhancement of the aroma of harshness components present in barley tea. However, according to the present invention, when 2,3-butanedione is incorporated in a barley tea beverage, the unique aromas of barley tea, which are typically contributed by cyclotene, can be enhanced, and thus, a barley tea having comparable aromas to the one drunk at low temperatures -- *i.e.*, a barley tea that is low in harsh taste and rich in sweet and roasted flavors -- can be obtained without the need to reduce harshness components. One example of harshness components in barley tea is guaiacol, which is perceived as a chemical odor substance. As referred to herein, the term "harsh taste (harshness)" refers to a taste that spoils the inherent taste of barley tea and combines bitter and astringent tastes which spoil a clean and crisp aftertaste.

The taste quality improving agent of the present invention enhances the flavors of unique sweet and roasted aroma components of barley tea, as typified by cyclotene, thereby resulting in relative reduction (masking) of the harsh taste typically caused by guaiacol. In this invention, it is preferred to incorporate 2,3-butanedione and 2,3-pentanedione in barley tea so as to ensure that a mass ratio of the total content of 2,3-butanedione and 2,3-pentanedione to the content of guaiacol in barley tea [total content of (2,3-butanedione + 2,3-pentanedione)/content of guaiacol] falls within the range of from 2.8 to 10, since more remarkable effects are achieved. The mass ratio of [total content of (2,3-butanedione + 2,3-pentanedione)/content of guaiacol] is more preferably in the range of from 3.0 to 9, still more preferably from 3.5 to 8, especially preferably from 4 to 6.

In a preferred embodiment of the present invention, the total content of 2,3-butanedione and 2,3-pentanedione in barley tea per soluble solids content is not less than 3500 ppb/Bx, more preferably not less than 4300 ppb/Bx, still more preferably not less than 5000 ppb/Bx. By incorporating 2,3-butanedione and 2,3-pentanedione in such a way as to achieve such a total content, sweet and roasted aromas can enhanced to such an extent as to affect not only the tope note but also the middle note, and a harsh taste can be effectively masked. The upper limit of the total content of 2,3-butanedione and 2,3-pentanedione in barley tea is not particularly limited, but is preferably not more than 12000 ppb/Bx or not more than 10000 ppb/Bx, because too strong a sweet aroma may cause a lack of balance in aromas.

As referred to herein, the phrase "per soluble solids content" means "per concentration of soluble solids in a liquid extract at 20°C". The soluble solids content is equivalent to a Brix value determined using a sugar content meter, refractometer, or the like. The Brix value refers to a value obtained by converting a refractive index measured at 20°C into a mass/mass percentage of sucrose in solution based on the conversion table published by ICUMSA (the International Commission for Uniform Methods of Sugar Analysis). For example, in the present invention, by stating "comprising 2,3-butanedione at a concentration of 3000 ppb per soluble solids content", it is meant that the quotient of the content [ppb] of 2,3-butanedione in a liquid extract by the soluble solids content [Bx] in the liquid extract yields 3000.

The taste quality improving agent of the present invention comprising at least one selected from 2,3-butanedione and 2,3-pentanedione is intended for use to enhance the unique flavors of barley tea, and is particularly advantageously applied to barley tea drunk at ordinary temperature. According to this invention, the unique sweet and roasted aromas of barley tea, which are typically contributed by cyclotene, can be enhanced. In a preferred embodiment of this invention, the content of cyclotene in barley tea per soluble solids content is not less than 300 (ppbffix), more preferably not less than 350, still more preferably not less than 500, from the viewpoint that the effects of this invention can be remarkably exhibited. The upper limit of the content of cyclotene in barley tea per soluble solids content is not particularly limited, but is preferably approximately 3000 (ppbffix), because too strong a sweet aroma may cause a lack of balance in aromas.

The origins of 2,3-butanedione and 2,3-pentanedione used in the taste quality improving agent of the present invention are not particularly limited as long as they are commonly used in the fields of foods and beverages. For example, chemically synthesized products, or exacts from plants containing 2,3-butanedione and/or 2,3-pentanedione, may be used. However, procedures using a plant extract are preferred from the viewpoint of safety.

2,3-Butanedione and 2,3-pentanedione may be produced by degradation of carbohydrates during heat treatment of barley. For example, by roasting barley in an appropriate manner, it is possible to obtain roasted barley in which 2,3-butanedione and 2,3-pentanedione are produced in large amounts. An extract from such roasted barley is one of preferred embodiments of the taste quality improving agent of the present invention. It is also preferred to use 2,3-butanedione and 2,3-pentanedione in the form of an extract from roasted barley, from the viewpoint that there occur no other problems than that with barley aromas -- *e.g.*, there is no influence of the taste of a plant extract added on the taste of barley tea.

(Roasted barley rich in 2,3-butanedione and 2,3-pentanedione)

In the present invention, 2,3-butanedione and 2,3-pentanedione can be used in the form of an extract from barley roasted to an L-value of from 20 to 50 (preferably approximately from 30 to 40). As referred to herein, the L-value is a value for evaluating the degree of roasting of barley by color (brightness). The L-value can be measured using a color difference meter, with 0 being regarded as black and 100 being regarded as white. As a color difference meter, a brightness measurement unit (Colorette 4, produced by Probat) can be used.

The present inventors found that when barley is roasted under the particular conditions defined using a percent change in brightness as an index, an extract from the roasted barley becomes specifically enriched in 2,3-butanedione and 2,3-pentanedione. Such barley specifically rich in 2,3-butanedione and 2,3-pentanedione is advantageously used as a source material for the taste quality improving agent of the present invention.

One specific example of the roasting under the particular conditions defined using a percent change in brightness as an index is roasting under such conditions that, when 550 g of barley is placed and roasted in a hot air drum roaster (produced by Neotec), the percent change in brightness as given by Equation 1 as shown below is determined to be not less than -0.12 and less than -0.04.

[Chem. 1]

$$\text{Percent change in brightness} = \frac{L_{T2} - L_{T1}}{T2 - T1}$$

$\cdots$ Equation 1

T1, T2: Time points after the start of roasting (sec.); however, $T2 > T1 \geq 0$

$L_{T1}$: Percentage of brightness of barley at T1
(brightness of barley at T1 / brightness of barley before roasting)

$L_{T2}$: Percentage of brightness of barley at T2
(brightness of barley at T2 / brightness of barley before roasting)

As referred to above, the percentage of brightness is a value given by Equation 2 as shown below.
[Chem. 2]

$$\text{Percentage of brightness} = \frac{L_{Tn}}{L_{T0}}$$

$\cdots$ Equation 2

T0: Before the start of roasting (0 sec.)

Tn: Certain time point after the start of roasting (sec.); however, $Tn > 0$

$L_{T0}$: Brightness (L-value) of barley at T0

$L_{Tn}$: Brightness (L-value) of barley at a certain time point

The percentage of brightness is a percentage of the brightness (L-value) of barley at a certain time point (Tn (*e.g.*, T1, T2)) after the start of roasting relative to that of barley before the start of roasting (*i.e.*, at a roasting time of 0 sec. (T0)).

As referred to herein, the brightness of barley refers to an L-value measured by a brightness measurement unit (Colorette 4, produced by Probat) after barley is ground in a grinder (corn-type coffee grinder KG364J, produced by DeLonghi).

The roasted barley according to a preferred embodiment of the present invention is obtained by roasting under the particular conditions defined using a percent change in brightness as an index as described above. The roasted barley of this invention ensures that a liquid extract obtained by extracting 5 g of the roasted barley with 200 mL of hot water at 100°C for 5 minutes has a total content of 2,3-butanedione and 2,3-pentanedione per soluble solids content of preferably not less than 3500 ppb/Bx, more preferably not less than 5000 ppb/Bx, still more preferably not less than 6000 ppb/Bx, yet more preferably not less than 7000 ppb/Bx, further still more preferably not less than 8000 ppb/Bx. A liquid extract from the roasted barley of this invention is specifically rich in 2,3-butanedione and 2,3-pentanedione, and in a preferred embodiment, has a mass ratio of total content of (2,3-butanedione + 2,3-pentanedione)/content of guaiacol of not less than 2.8. In the case of a liquid barley extract obtained from conventional common roasted barley in the same way, the total content of 2,3-butanedione and 2,3-pentanedione per soluble solids content is in the range of approximately from 1000 to 3100 ppb/Bx, and the mass ratio of total content of (2,3-butanedione + 2,3-pentanedione)/content of guaiacol is approximately not more than 2.2.

In one embodiment, the present invention is directed to a method for producing a barley tea beverage, the method comprising incorporating at least one selected from 2,3-butanedione and 2,3-pentanedione. In a preferred embodiment, the method for producing a barley tea beverage according to this invention involves obtaining a liquid extract from roasted barley comprising 2,3-butanedione and 2,3-pentanedione. Extraction from roasted barley can be performed by a known procedure -- *e.g.*, using water, hot water, or an aqueous solution containing an extraction aid. Extraction can be carried out by employing a known method, such as kneader extraction, stirring extraction (batch extraction), countercurrent extraction (drip extraction) or column extraction. The extraction may be done after grinding roasted barley as a source material. Extraction conditions are not particularly limited and can be selected as appropriate depending on the extraction procedure.

The barley tea beverage of the present invention may have various additives optionally added thereto, to the extent that there is no deviation from the intended object of this invention. Examples of various additives that can be used include, but are not limited to, antioxidant, pigment, essence, and flavoring.

The barley tea beverage of the present invention has a pH of preferably from 4.5 to 7.0, more preferably from 5.0 to 6.5. The pH of the beverage can be adjusted, as appropriate, using a pH adjustor such as sodium hydrogen carbonate or sodium hydroxide. The pH of the beverage can be measured at 20°C using a commercially available pH meter.

The barley tea beverage of the present invention may be in the form of a packaged beverage. According to this invention, even when the packaged barley tea beverage is drunk at ordinary temperature, favorable aromas unique to barley tea can be perceived pronouncedly. Thus, such a packaged barley tea beverage is one of preferred embodiments of this invention.

The package used for the packaged barley tea beverage can be any of known packages used for common beverages. For example, a resin package, a metal package, a paper package, a glass package, or the like can be advantageously used. In one embodiment, the packaged barley tea beverage can be provided in a form packed and sealed in, for example, a molded package mainly made of polyethylene terephthalate (so-called PET bottle), a metal can, a paper package combined with a metallic foil or plastic film, or a glass bottle. The volume of the barley tea beverage of this invention is not particularly limited, and is for example in the range of from 100 mL to 3000 mL, preferably from 350 mL to 2000 mL, more preferably from 500 to 1000 mL.

EXAMPLES

Hereunder, the present invention will be specifically described in detail by way of experimental examples, but this invention is not limited to these examples. Unless otherwise stated herein, all numerical ranges are inclusive of their endpoints.

Experiment 1: Taste quality improvement effect of 2,3-butanedione (1)

Two hundred milliliters of hot water at 100°C was poured over 5 g of roasted barley (*Marutsubu Mugicha*, produced by Hakubaku Co., Ltd.) commercially available for making barley tea, and the mixture was left for 5 minutes and then subjected to solid-liquid separation with a 10-200-mesh metal strainer to obtain a liquid barley extract having a soluble solids content (Bx) of 0.016 (Sample 1-1, cyclotene content: 15 ppb). To the obtained liquid barley extract, 2,3-butanedione (produced by FUJIFILM Wako Pure Chemical Corporation) was added to give different concentrations as indicated in Table 1, whereby different samples were prepared (Samples 1-2, 1-3). Separately, another sample was prepared by adding 2,3-butanedione (produced by FUJIFILM Wako Pure Chemical Corporation) and guaiacol (produced by FUJIFILM Wako Pure Chemical Corporation) to Sample 1-1 to give the concentrations indicated in Table 1 (Sample 1-4).

The prepared barley tea beverage samples were subjected to sensory evaluation by five professional panelists, with Sample 1-1 being used as a control. After the panelists aligned with each other regarding the rating scale, with a barley tea beverage cooled at refrigeration temperature (5°C) being used as a reference sample, each of the panelists gave the samples a score of from 1 to 7 points (in half-point increments) from the viewpoints of intensity of roasted aroma, intensity of sweet aroma, and clean sensation (taste with no harshness), based on Sample 1-1 which was given a score of 4 points. The ratings given by the panelists were averaged. The barley tea beverage samples were also comprehensively evaluated for improvement of taste quality (*i.e.*, enhanced sweet and roasted aromas and reduced harshness) according to the scale detailed below.

- ○: All of the five panelists determined that the taste quality of a sample was improved.
- △: Three or four of the panelists determined that the taste quality of a sample was improved.
- ✕: Two or less of the panelists determined that the taste quality of a sample was improved.

The results are shown in Table 1. When 2,3-butanedione was added, roasted and sweet aromas were enhanced, an unfavorable aroma typically caused by guaiacol became less perceivable, and a harsh aftertaste was reduced. As the mass ratio of the total content of (A) 2,3-butanedione and (B) 2,3-pentanedione ((A)+(B)) to the content of guaiacol ([(A)+(B)]/Guaiacol) was higher, roasted and sweet aromas were more strongly enhanced, a negative aroma became relatively less perceivable, and an uncomfortable (harsh) aftertaste was more effectively reduced.

[Table 1]

| Sample No. | 1-1 (Control) | 1-2 | 1-3 | 1-4 |
|---|---|---|---|---|
| (A) 2,3-Butanedione (ppb) | 40 | 100 | 140 | 120 |
| (B) 2,3-Pentanedione (ppb) | 7 | 7 | 7 | 7 |
| Soluble solids content (Bx) | 0.016 | 0.016 | 0.016 | 0.016 |
| [(A)+(B)]/Bx | 2937.5 | 6687.5 | 9187.5 | 7937.5 |

(continued)

| Sample No. | 1-1 (Control) | 1-2 | 1-3 | 1-4 |
|---|---|---|---|---|
| Guaiacol (ppb) | 25 | 25 | 25 | 40 |
| [(A)+(B)]/ Guaiacol | 1.9 | 4.3 | 5.9 | 3.2 |
| Roasted aroma | 4.0 | 4.3 | 4.5 | 4.8 |
| Sweet aroma | 4.0 | 5.6 | 6.2 | 5.6 |
| Clean sensation | 4.0 | 4.5 | 5.1 | 4.4 |
| Improvement of taste quality | × | ○ Sweet and roasted aromas are strongly perceived. Harsh aroma (harshness) of barley is less perceivable. | ○ Sweet aroma is perceived and also a clean sensation is enhanced. | ○ Sweet and roasted aromas are strongly perceived. |

Experiment 2: Taste quality improvement effect of 2,3-butanedione (2)

Different barley tea beverage samples were prepared with addition of 2,3-butanedione by following the same procedure as in Experiment 1 except that a control barley tea beverage (Sample 2-1) was prepared from commercially available roasted barley (*Tsubumaru*, produced by Ogawa Industrial Co., Ltd.) by diluting with water to give a soluble solids content of 0.03. The prepared barley tea beverage samples were subjected to sensory evaluation at ordinary temperature.

The results are shown in Table 2. Like in Experiment 1, when 2,3-butanedione was added to a barley tea beverage sample prepared from a different type of barley, roasted and sweet aromas were enhanced, an unfavorable aroma typically caused by guaiacol became less perceivable, and a harsh aftertaste was reduced.

[Table 2]

| Sample No. | 2-1 (Control) | 2-2 | 2-3 | 2-4 | 2-5 |
|---|---|---|---|---|---|
| (A) 2,3-Butanedione (ppb) | 75 | 120 | 140 | 160 | 180 |
| (B) 2,3-Pentanedione (ppb) | 25 | 25 | 25 | 25 | 25 |
| Soluble solids content (Bx) | 0.03 | 0.03 | 0.03 | 0.03 | 0.03 |
| [(A)+(B)]/Bx | 3333.3 | 4833.3 | 5500.0 | 6166.7 | 6833.3 |
| Guaiacol (ppb) | 45 | 45 | 45 | 45 | 45 |
| [(A)+(B)]/ Guaiacol | 2.2 | 3.2 | 3.7 | 4.1 | 4.6 |
| Roasted aroma | 4.0 | 4.4 | 4.5 | 4.6 | 4.6 |
| Sweet aroma | 4.0 | 4.6 | 4.9 | 5.2 | 5.6 |
| Clean sensation | 4.0 | 4.4 | 4.4 | 4.8 | 4.8 |

(continued)

| Sample No. | 2-1 (Control) | 2-2 | 2-3 | 2-4 | 2-5 |
|---|---|---|---|---|---|
| Improvement of taste quality | ✕ An itchy aftertaste is perceived. | ○ Sweet aroma is somewhat enhanced. | ○ Sweet aroma is strongly perceived even in the middle of drinking. | ○ Sweet and roasted aromas are strongly perceived. | ○ Sweet aroma is perceived and also a clean sensation is enhanced (the aftertaste is clean). |

Experiment 3: Taste quality improvement effect of 2,3-pentanedione

With Sample 1-1 prepared in Experiment 1 being used as a control (Sample 3-1), different barley tea beverage samples were prepared by following the same procedure as in Experiment 1 except that 2,3-pentanedione (produced by Tokyo Chemical Industry Co., Ltd.) was added to give different concentrations as indicted in Table 3. The prepared barley tea beverage samples were subjected to sensory evaluation at ordinary temperature.

The results are shown in Table 3. As the mass ratio of the total content of (A) 2,3-butanedione and (B) 2,3-pentanedione ((A)+(B)) to the content of guaiacol ([(A)+(B)]/Guaiacol) was increased by addition of 2,3-pentanedione, roasted and sweet aromas were more strongly enhanced, a negative aroma became relatively less perceivable, and an uncomfortable (harsh) aftertaste was more effectively reduced.

[Table 3]

| Sample No. | 3-1 (Control) | 3-2 | 3-3 | 3-4 | 3-5 |
|---|---|---|---|---|---|
| (A) 2,3-Butanedione (ppb) | 40 | 40 | 40 | 40 | 40 |
| (B) 2,3-Pentanedione (ppb) | 7 | 20 | 30 | 40 | 60 |
| Soluble solids content (Bx) | 0.016 | 0.016 | 0.016 | 0.016 | 0.016 |
| [(A)+(B)]/Bx | 2937.5 | 3750.0 | 4375.0 | 5000.0 | 6250.0 |
| Guaiacol (ppb) | 25 | 25 | 25 | 25 | 25 |
| [(A)+(B)]/Guaiacol | 1.9 | 2.4 | 2.8 | 3.2 | 4.0 |
| Roasted aroma | 4.0 | 4.3 | 4.5 | 4.7 | 4.9 |
| Sweet aroma | 4.0 | 4.4 | 4.7 | 4.9 | 5.2 |
| Clean sensation | 4.0 | 4.2 | 4.4 | 4.5 | 4.8 |
| Improvement of taste quality | ✕ | △ | ○ | ○ | ○ |

From the results shown in Tables 1 to 3, it was revealed that when 2,3-butanedione and 2,3-pentanedione are added to barley tea so as to ensure that a mass ratio of the total content of 2,3-butanedione and 2,3-pentanedione to the content of guaiacol in barley tea [total content of (2,3-butanedione + 2,3-pentanedione)/content of guaiacol] is not less than 2.8, the aromas of unique sweet and roasted aroma components of barley tea are enhanced and the aroma of harshness components typified by guaiacol becomes less perceivable, even when a barley tea beverage is drunk at ordinary temperature.

Experiment 4: Taste quality improvement effect of liquid extracts of roasted barley rich in 2,3-butanedione and 2,3-pentanedione

4-1. Preparation of roasted barley samples

Roasting was done using a hot air drum roaster (produced by Neotec). First, the hot air drum roaster was preliminarily rum until the air temperature in the roaster (also called "the temperature of the roasting chamber") reached 130°C. After the temperature of the roasting chamber reached 130°C, 550 g of barley as a source material was placed in the roasting chamber to start a roasting process. Through adjusting hot air so as to give different percent changes in brightness of barley as detailed below, different roasted barley samples A to C with a brightness (L-value) of from 30 to 40 were obtained.

■ Roasted barley sample A: With the brightness at 0 minute (at the start of roasting) being regarded as a baseline, barley was roasted for 3 minutes to give a percent change in brightness of -0.12.
■ Roasted barley sample B: With the brightness at 0 minute (at the start of roasting) being regarded as a baseline, barley was roasted for 7 minutes to give a percent change in brightness of -0.03, and then further roasted for 3 minutes to give a percent change in brightness of -0.06.
■ Roasted barley sample C: Before roasting, 1 kg of raw barley was soaked in 800 g of water at ordinary temperature for 1 hour, and then roasted under the same conditions as those for roasted barley sample A.

As referred to above, the percent change in brightness is a value given by Equation 1 as shown below.
[Chem. 3]

$$\text{Percent change in brightness} = \frac{L_{T2} - L_{T1}}{T2 - T1} \quad \cdots \text{Equation 1}$$

T1, T2:   Time points after the start of roasting (sec.); however, $T2 > T1 \geq 0$
$L_{T1}$:   Percentage of brightness of barley at T1
          (brightness (L-value) of barley at T1 / brightness (L-value) of barley before roasting)
$L_{T2}$:   Percentage of brightness of barley at T2
          (brightness (L-value) of barley at T2 / brightness (L-value) of barley before roasting)

The brightness (L-value) of barley was measured using a brightness measurement unit (Colorette 4, produced by Probat) after the barley was ground in a grinder. With the use of a corn-type coffee grinder (KG364J, produced by DeLonghi), barley was ground with the ground grain size being set to the finest (*i.e.*, a 14-step adjustable grinder scale was set to extra-fine grinding).

4-2. Analysis of roasted barley extracts

Different barley tea beverage samples were prepared from each of the obtained roasted barley samples A to C and roasted barley products commercially available for making barley tea (D: Hakubaku's barley; E: *Tsubumaru*), and analyzed for their constituents by gas chromatography/mass spectrometry (GC/MS). The barley tea beverage samples were prepared by extracting 5 g of each type of roasted barley with 200 mL of hot water at 100°C for 5 minutes. The contents of constituents in the liquid extracts were analyzed by the procedure detailed below.

-   GC main unit: 7890A, produced by Agilent Technologies

-   MS detector: 5975C Inert XL MSD with Triple-Axis Detector, produced by Agilent Technologies

-   Sample pretreatment unit: MultiPurpose Sampler MPS for GC

-   Sample injection conditions: Dynamic headspace method

    Sample temperature: 80°C

    Pressure: 160 kPa

    Septum purge flow rate: 3 mL/min

    Splitless mode

-   Column: HP-INNOWAX (length: 60 m, I.D.: 0.250 mm, thickness: 0.25 μm)

    Flow rate: 1.5 mL/min

Pressure: 160 kPa

- Oven: 40°C→240°C (at 7.5°C/min.)

- MS: Ion source temperature: 240°C

  Ionization mode: EI

  Measurement mode: SIM/Scan

  EM gain: 1800 V

- Post-run time: 10 min.

The analysis results are shown in Table 4. It was found that the roasted barley samples prepared by roasting to achieve a percent change in brightness of not less than -0.12 and less than -0.04 were specifically high in the content of 2,3-butanedione and 2,3-pentanedione. As a result of the sensory evaluation of the liquid extracts at ordinary temperature, it was determined that the beverages prepared from the roasted barley samples A to C were strong in sweet and roasted aromas unique to barley tea, and low in harsh taste as compared to the beverages prepared from the commercially available roasted barley products (D, E).

[Table 4]

| | Roasted barley A | Roasted barley B | Roasted barley C | Roasted barley D | Roasted barley E |
|---|---|---|---|---|---|
| (A) 2,3-Butanedione (ppb) | 131.5 | 117.0 | 66.5 | 42.0 | 74.8 |
| (B) 2,3-Pentanedione (ppb) | 44.6 | 34.0 | 19.2 | 7.1 | 25.0 |
| Soluble solids content (Bx) | 0.026 | 0.018 | 0.017 | 0.016 | 0.089 |
| [(A)+(B)]/Bx | 6772.2 | 8388.9 | 5041.9 | 3070.0 | 1121.1 |
| Guaiacol (ppb) | 27.1 | 33.0 | 31.0 | 24.0 | 45.7 |
| [(A)+(B)]/Guaiacol | 6.5 | 4.6 | 2.8 | 2.1 | 2.2 |
| Cycloten (ppb) | 41.4 | 34.6 | 20.4 | 15.0 | 32.1 |

4-3. Taste quality improvement effect of liquid extracts of roasted barley

Each of the liquid extracts prepared from the roasted barley sample A or B in Experiment 4-2 was added to each of the liquid extracts from the commercially available roasted barley products (D, E), and the mixtures were determined for their taste quality improvement effect. To be specific, each of the liquid extracts from the roasted barley sample A or B was mixed with each of the liquid extracts from the roasted barley product D or E at different ratios as indicated in the table given below, thereby preparing different mixed barley tea beverage samples. These beverage samples were subjected to sensory evaluation on taste quality improvement effect at ordinary temperature by following the same procedure as in Experiment 1.
The results are shown in Tables 5 and 6. By addition of the liquid extracts of roasted barley rich in 2,3-butanedione and 2,3-pentanedione, the taste quality of the barley tea beverages when drunk at ordinary temperature was improved.

[Table 5]

| Sample No. | 4-1 (Control) | 4-2 | 4-3 | 4-4 | 4-5 |
|---|---|---|---|---|---|
| Mixing ratio of roasted barley extracts | E:A=10:0 | E:A=9:1 | E:A=8:2 | E:A=6:4 | E:B=7:3 |
| (A) 2,3-Butanedione (ppb) | 74.8 | 80.4 | 86.1 | 97.5 | 87.4 |
| (B) 2,3-Pentanedione (ppb) | 25.0 | 27.0 | 28.9 | 32.8 | 27.7 |

(continued)

| Sample No. | 4-1 (Control) | 4-2 | 4-3 | 4-4 | 4-5 |
|---|---|---|---|---|---|
| Soluble solids content (Bx) | 0.089 | 0.083 | 0.076 | 0.064 | 0.068 |
| [(A)+(B)]/Bx | 1121.1 | 1686.2 | 2251.3 | 3381.5 | 3301.4 |
| Guaiacol (ppb) | 45.7 | 43.9 | 42.0 | 38.3 | 41.9 |
| [(A)+(B)]/Guaiacol | 2.2 | 2.6 | 3.0 | 3.9 | 2.9 |
| Improvement of taste quality | × | △ | ○ | ○ | ○ |

[Table 6]

| Sample No. | 5-1 (Control) | 5-2 | 5-3 |
|---|---|---|---|
| Mixing ratio of roasted barley extracts | D:A=10:0 | D:A=8:2 | D:B=7:3 |
| (A) 2,3-Butanedione (ppb) | 42.0 | 59.9 | 64.5 |
| (B) 2,3-Pentanedione (ppb) | 7.1 | 14.6 | 15.1 |
| Soluble solids content (Bx) | 0.016 | 0.018 | 0.017 |
| [(A)+(B)]/Bx | 3070.0 | 3810.5 | 4665.7 |
| Guaiacol (ppb) | 24.0 | 24.6 | 26.7 |
| [(A)+(B)]/Guaiacol | 2.1 | 2.9 | 2.8 |
| Improvement of taste quality | × | ○ | ○ |

**Claims**

1. A taste quality improving agent for barley tea comprising at least one selected from 2,3-butanedione and 2,3-pentanedione.

2. The taste quality improving agent according to claim 1, wherein the taste quality improving agent is intended for enhancing the flavors of barley tea drunk at ordinary temperature.

3. The taste quality improving agent according to claim 1 or 2, wherein the taste quality improving agent is used so as to ensure that a mass ratio of the total content of 2,3-butanedione and 2,3-pentanedione to the content of guaiacol in barley tea [(2,3-butanedione + 2,3-pentanedione)/guaiacol] falls within the range of from 2.8 to 10.

4. A method for improving the taste quality of a barley tea beverage, the method comprising incorporating 2,3-butanedione in barley tea so as to ensure that a mass ratio of the total content of 2,3-butanedione and 2,3-pentanedione to the content of guaiacol in barley tea [(2,3-butanedione + 2,3-pentanedione)/guaiacol] falls within the range of from 2.8 to 10.

5. A barley tea beverage having a mass ratio of the total content of 2,3-butanedione and 2,3-pentanedione to the content of guaiacol in barley tea [(2,3-butanedione + 2,3-pentanedione)/guaiacol] of from 2.8 to 10.

6. A roasted barley having an L-value of from 20 to 50, wherein the roasted barley ensures that a liquid extract obtained by extracting 5 g of the roasted barley with 200 mL of hot water at 100°C for 5 minutes has a total content of 2,3-butanedione and 2,3-pentanedione per soluble solids content (Bx) of not less than 3500 ppb/Bx.

7. A barley tea beverage made from the roasted barley according to claim 6 as a source material.

| | |
|---|---|
| **INTERNATIONAL SEARCH REPORT** | International application No.<br>PCT/JP2021/021173 |

**A. CLASSIFICATION OF SUBJECT MATTER**
Int.Cl. A23L2/00(2006.01)i, A23L2/38(2021.01)i
FI: A23L2/00B, A23L2/38L, A23L2/38M

According to International Patent Classification (IPC) or to both national classification and IPC

**B. FIELDS SEARCHED**

Minimum documentation searched (classification system followed by classification symbols)
Int.Cl. A23L2/00, A23L2/38, A23F3/00, A23F5/00

Documentation searched other than minimum documentation to the extent that such documents are included in the fields searched
 Published examined utility model applications of Japan    1922-1996
 Published unexamined utility model applications of Japan  1971-2021
 Registered utility model specifications of Japan          1996-2021
 Published registered utility model applications of Japan  1994-2021

Electronic data base consulted during the international search (name of data base and, where practicable, search terms used)
 JSTPlus/JMEDPlus/JST7580(JDreamIII),
 CAplus/REGISTRY/MEDLINE/EMBASE/BIOSIS/AGRICOLA/FSTA(STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2017-51126 A (SHIONO KORYO KK) 16 March 2017 (2017-03-16), claims, paragraphs [0014]-[0016], [0032], examples, tables 4-7 | 1-2<br>3-7 |
| X<br>A | JP 2014-18181 A (ASAHI SOFT DRINKS CO., LTD.) 03 February 2014 (2014-02-03), claims, paragraphs [0020], [0039]-[0066], examples, tables 1, 2 | 1-2<br>3-7 |
| A | YAHYA, H. et al., Flavour generation during commercial barley and malt roasting operations: A time course study, Food Chemistry, 2014, vol. 145, no. 15, pp. 378-387, DOI: 10.1016/j.foodchem.2013.08.046, abstract, p. 378, right column, l. 3 to p. 379, right column, l. 26, table 1 | 1-7 |

☒ Further documents are listed in the continuation of Box C.          ☒ See patent family annex.

| | |
|---|---|
| \*    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search<br> 08 July 2021 | Date of mailing of the international search report<br> 10 August 2021 |
|---|---|
| Name and mailing address of the ISA/<br> Japan Patent Office<br> 3-4-3, Kasumigaseki, Chiyoda-ku,<br> Tokyo 100-8915, Japan | Authorized officer<br><br><br>Telephone No. |

Form PCT/ISA/210 (second sheet) (January 2015)

**INTERNATIONAL SEARCH REPORT**

| International application No. |
|---|
| PCT/JP2021/021173 |

C (Continuation). DOCUMENTS CONSIDERED TO BE RELEVANT

| Category* | Citation of document, with indication, where appropriate, of the relevant passages | Relevant to claim No. |
|---|---|---|
| A | TATSU, S. et al., Key odorants in Japanese roasted barley tea (mugi-cha) - Differences between roasted barley tea prepared from naked barley and roasted barley tea prepared from hulled barley, J. Agric. Food Chem., 11 February 2020, vol. 68, no. 9, pp. 2728-2737, DOI: 10.1021/acs.jafc.9b08063, introduction, materials and methods, tables 2, 3 | 1-7 |
| A | PAPETTI, A. et al., Free α-dicarbonyl compounds in coffee, barley coffee and soy sauce and effects of in vitro digestion, Food Chemistry, 2014, vol. 164, pp. 259-265, DOI: 10.1016/j.foodchem.2014.05.022, 1. Introduction, 2. Materials and methods, table 1 | 1-7 |
| A | JP 2015-100306 A (ASAHI SOFT DRINKS CO., LTD.) 04 June 2015 (2015-06-04), claims, examples | 1-7 |
| A | JP 54-145298 A (ISHIGAKI FOODS CO., LTD.) 13 November 1979 (1979-11-13), claims, examples | 1-7 |
| A | JP 47-9719 A (INTERNATIONAL FLAVORS & FRAGRANCES, INC.) 18 May 1972 (1972-05-18), claims, examples | 1-7 |

Form PCT/ISA/210 (second sheet) (January 2015)

International application No.

PCT/JP2021/021173

| | | |
|---|---|---|
| JP 2017-51126 A | 16 March 2017 | (Family: none) |
| JP 2014-18181 A | 03 February 2014 | (Family: none) |
| JP 2015-100306 A | 04 June 2015 | (Family: none) |
| JP 54-145298 A | 13 November 1979 | (Family: none) |
| JP 47-9719 A | 18 May 1972 | (Family: none) |

Form PCT/ISA/210 (patent family annex) (January 2015)

**REFERENCES CITED IN THE DESCRIPTION**

**Patent documents cited in the description**

- JP 2012217348 A
- JP 2012170332 A